# EUROPÄISCHE PATENTANMELDUNG

(11) **EP 1 591 598 A1**
(43) Veröffentlichungstag der Anmeldung: **02.11.2005**
(21) Anmeldenummer: 05005442.8
(22) Anmeldetag: 12.03.2005
(51) Int. Cl.: E04C 2/04

(54) **Versatz zur Erstellung eines Dämmelementes sowie ein Dämmelement**

(30) Priorität: 28.04.2004 DE 102004020889
(71) Anmelder: Knauf Perlite GmbH, 44147 Dortmund (DE)
(72) Erfinder: Koslowski, Thomas, Dr., 44227 Dortmund (DE)
(74) Vertreter: Berkenbrink, Kai-Oliver

(57) **Zusammenfassung**

Die Erfindung betrifft einen Versatz zur Erstellung eines Dämmelementes auf Basis von geblähter Perlite sowie ein auf Basis von geblähter Perlite erstelltes Dämmelement.

## Beschreibung

Die Erfindung betrifft einen Versatz zur Erstellung eines Dämmelementes auf Basis von geblähter Perlite sowie ein auf Basis von geblähter Perlite erstelltes Dämmelement.

Bei geblähter Perlite handelt es sich um ein körniges Schüttgut aus geblähter, natürlicher Perlite. Natürliche Perlite, ein vulkanisches Gesteinsglas, wird bei Erhitzung infolge Wasserverdampfung stark expandiert (gebläht) und dadurch zu einem sehr porösen, leichten Schüttgut mit einem Schüttgewicht von nur etwa 30 - 100 kg/m³.

Aufgrund seiner geringen Dichte eignet sich geblähte Perlite hervorragend als Isoliermaterial für Dämmzwecke.

Problematisch ist die Verwendung von geblähter Perlite zur Erstellung von formstabilen Dämmelementen auf der Basis von geblähter Perlite und einem Bindemittel. Denn aufgrund der hohen Porosität von geblähter Perlite dringt ein hoher Anteil des verwendeten Bindemittels, üblicherweise Kieselsol, Wasserglas oder Kunststoff bzw. Kunststoffdispersionen, in die Perlite ein. Dies ist mit zahlreichen Nachteilen verbunden:
- Das Bindemittel ist im Versatz zu einem großen Anteil nicht dort, wo es wirken soll, nämlich an der Oberfläche der Körner aus geblähter Perlite, um diese miteinander zu verbinden;
- es werden hohe Mengen an Bindemittel benötigt, was mit hohen Kostenverbunden ist;
- die Festigkeitswerte der aus dem Perlite/Bindemittel-Versatz erstellten Dämmelemente sind gering, da ein zu geringer Bindemittelanteil an der Oberfläche der Körner aus geblähter Perlite verbleibt;
- die erstellten Dämmelemente müssen langwierig getrocknet werden, um die in die geblähte Perlite eingedrungenen Wasseranteile des Bindemittels zu verdampfen;
- die Dämmwerte der erstellten Dämmelemente sind gering, da ein erhebliches Volumen der isolierenden, porösen Innenstruktur der geblähten Perlite mit Bindemittel ausgefüllt ist. Gleichzeitig ist die Rohdichte der geblähten Perlite und damit auch die Dichte und das Gewicht der aus der Perlite erstellten Dämmelemente hoch.

In der Vergangenheit wurde vielfach versucht, ein Eindringen des Bindemittels in die geblähte Perlite dadurch zu verhindern, dass die Körner aus geblähter Perlite vor dem Vermischen mit dem Bindemittel an ihrer Oberfläche hydrophobiert wurden. Das hydrophobierte Korn konnte dann jedoch nur unzureichend von Bindemittel benetzt werden, wodurch der Kontakt zwischen den Körnern aus geblähter Perlite und Bindemittel und damit auch die Festigkeit des daraus erstellten Dämmelementes vermindert wurde.

Da geblähte Perlite im Dämmelement jedoch dazu neigt, Wasser aufzunehmen, ist es notwendig, die geblähte Perlite im Dämmelement gegen ein Eindringen von Wasser zu schützen. Um die vorgenannten Nachteile bei einer unmittelbaren Hydrophobierung des Perlitekorns nicht in Kauf nehmen zu müssen, wurde nach dem Stand der Technik regelmäßig die äußere Oberfläche des Dämmelementes mit einer Wasser abweisenden Schicht versehen. Bei einer Verletzung dieser Schicht, beispielsweise durch eine bauseitige Bearbeitung des Dämmelementes oder durch eine unbeabsichtigte Beschädigung, konnte jedoch Wasser in das Dämmelement eindringen; dadurch konnte das Dämmelement zerstört oder unbrauchbar werden, beispielsweise indem sich Mikroorganismen im Dämmmaterial ansiedelten.

Der Erfindung liegt die Aufgabe zugrunde, einen Versatz auf Basis von geblähter Perlite und einem Bindemittel zur Verfügung zu stellen, durch den ein Dämmelement erstellt werden kann, das eine höhere Dämmwirkung und Festigkeit aufweist als die gattungsgemäßen Dämmelemente nach dem Stand der Technik. Ferner soll das aus diesem Versatz erstellte Dämmelement wirkungsvoll gegen ein Eindringen von Wasser geschützt sein.

Weiter liegt der Erfindung die Aufgabe zugrunde, ein Dämmelement auf Basis von geblähter Perlite zur Verfügung zu stellen, das eine höhere Dämmwirkung und Festigkeit aufweist als die gattungsgemäßen Dämmelemente nach dem Stand der Technik und das wirkungsvoll gegen ein Eindringen von Wasser geschützt ist.

Erfindungsgemäß ist zur Lösung der Aufgabe zum einen ein Versatz zur Erstellung eines Dämmelementes vorgesehen mit
- 45-60 Gew.-% geblähter Perlite
- 30-50 Gew.-% Wasser
- 1-10 Gew.-% Kieselsol
- 2-10 Gew.-% Stärke und
- 0,1-0,5 Gew.-% Hydrophobierungsmittel
(die Angaben in Gew.-% beziehen sich auf die Anteile am Gesamtgewicht des Versatzes).

Das Bindemittel des anmeldungsgemäßen Versatzes enthält damit, neben den bisher nach dem Stand der Technik üblichen Anteilen an Wasser und Kieselsol, noch Anteile an Stärke und Hydrophobierungsmittel.

Die Erfindung basiert auf dem Grundgedanken, dass das Eindringen von Bindemittel in die Körner aus geblähter Perlite vollständig oder zumindest weitgehend verhindert werden muss, um aus dem Perlite/Bindemittel-Versatz ein Dämmmaterial mit guten Dämm- und Festigkeitswerten erstellen zu können.

Erfindungsgemäß wurde erkannt, dass dieses Eindringen dadurch verhindert werden kann, dass die Viskosität des Bindemittels so weit erhöht ist, dass es nicht oder nur zu einem sehr geringen Anteil in die Körner aus geblähter Perlite eindringt.

Das Bindemittel, basierend auf einer Mischung aus Wasser und Kieselsol (oder Wasserglas), enthält dazu einen Anteil Stärke, wodurch die Viskosität des Bindemittels erhöht wird. Im Versatz kann die Stärke in Gewichtsanteilen von 2-10 Gew.-%, also beispielsweise auch in Anteilen von 6-8 Gew.-%, vorliegen.

Durch den Anteil an Stärke im Versatz wird jedoch nicht nur das Eindringen des Bindemittels in die geblähte Perlite reduziert, sondern vielmehr auch das Wasserrückhaltevermögen des Bindemittels gegenüber der Saugkraft der geblähten Perlite stark erhöht.

Ferner weist die Stärke selbst eine verklebende Wirkung auf; dadurch kann die Grünstandsfestigkeit eines aus dem Versatz erstellten Dämmmaterials erhöht werden, bevor die klebende Wirkung der Wasser/Kieselsol-Mischung einsetzt.

Schließlich wurde festgestellt, dass Stärke als Haftvermittler wirkt, der die verklebende Wirkung der Wasser/Kieselsol-Mischung verstärkt.

Grundsätzlich kann eine beliebige Stärke verwendet werden, beispielsweise eine kaltwasserlösliche Stärke und/oder eine warmwasserlösliche Stärke (Kochstärke). Als kaltwasserlösliche oder warmwasserlösliche Stärke kann beispielsweise Kartoffelstärke verwendet werden.

Die geblähte Perlite kann im Versatz in Anteilen zwischen 45 und 60 Gew.-%, also beispielsweise auch in Anteilen von 50-58 Gew.-% vorliegen.

Grundsätzlich kann eine geblähte Perlite beliebiger Körnung verwendet werden; nach einer Ausführungsform ist vorgesehen, dass die geblähte Perlite eine Korngröße im Bereich von größer 0 bis 3mm aufweist. Die geblähte Perlite kann im Versatz in unterschiedlichen Fraktionen vorliegen, beispielsweise in einer Fraktion von 0 bis 0,5mm und in einer weiteren Fraktion von 0,5 bis 3mm.

Statt geblähter Perlite kann auch ein anderes geblähtes, mineralisches Schüttgut verwendet werden, beispielsweise geblähte Vermiculite, Schaumglas oder Blähglas.

Der Anteil an Wasser im Versatz kann 30-50 Gew.-%, also beispielsweise auch 42-48 Gew.-% betragen.

Kieselsol kann im Versatz mit Anteilen von 1-10 Gew.-% vorliegen. Im Gegensatz zu den Kieselsol-Anteilen im Bindemittel nach dem Stand der Technik konnte der Kieselsol-Anteil im erfindungsgemäßen Versatz erheblich reduziert werden, beispielsweise auf Anteile von nur 2-4,5 Gew.-%. Dies ist insbesondere auch darauf zurückzuführen, dass die Stärke im Versatz zur Verklebung mit beiträgt und als Haftvermittler für das Kieselsol wirkt.

Durch das Hydrophobierungsmittel wird der Versatz insgesamt Wasser abweisend (hydrophobiert); insbesondere kann Silikonat, das sich als besonders wirksames Hydrophobierungsmittel erwiesen hat, als Hydrophobierungsmittel eingesetzt werden. Der große Vorteil dieses insgesamt hydrophobierten Versatzes liegt insbesondere auch darin, dass der Versatz nunmehr über das Volumen hydrophobiert ist. Damit ist gleichzeitig auch das aus dem Versatz erstellte Dämmelement über das Volumen hydrophobiert, das endgültige Dämmelement also massehydrophobiert. Entsprechend kann, auch wenn das aus dem Versatz erstellte Dämmmaterial an einer beliebigen Stelle beschädigt wird, kein Wasser in das Dämmmaterial eindringen.

Dem Versatz können beliebige Hydrophobierungsmittel, beispielsweise Silikonate, nach dem Stand der Technik in Mengenanteilen von 0,1-0,5 Gew.-% beigefügt sein.

Nach einer weiteren Ausführungsform kann der anmeldungsgemäße Versatz einen Anteil an Verunreinigungen unter 1 Gew.-% aufweisen.

Üblicherweise enthält natürliche Perlite einen Anteil an Verunreinigungen an nicht blähfähigen Bestandteilen, wie zum Beispiel Obsidian oder Eisenerz, von bis zu 10 Gew.-%. Besonders nachteilig auf die Dämmeigenschaften von geblähter Perlite wirken sich Verunreinigungen in Form von Eisenerz aus, da dieses Wärmebrücken im Dämmelement bildet und die Dämmwirkung damit herabsetzt. Verunreinigungen in Form von Eisenerz können in natürlicher Perlite in Anteilen von bis zu 1 Gew.-% vorliegen.

Es kann vorgesehen sein, dass der Anteil an Verunreinigungen in Form von Eisenerz im anmeldungsgemäßen Versatz unter 0,1 Gew.-% liegt und in Form sonstiger Verunreinigungen unter 0,9 Gew.-%.

Ein Verfahren zur Herstellung eines Dämmelementes aus dem anmeldungsgemäßen Versatz kann beispielsweise wie folgt vorgesehen sein.

Zunächst werden die Einzelkomponenten des Versatzes, insbesondere also geblähte Perlite, Wasser, Kieselsol, Stärke und Hydrophobierungsmittel aufbereitet. Dabei kann beispielsweise vorgesehen sein, bestimmte Komponeneten mit Wasser vorzumischen, also beispielsweise
- Wasser und Stärke und/oder
- Wasser und Kieselsol und/oder
- Wasser und Hydrophobierungsmittel.

Die Komponenten der Mischung werden (einzeln oder bereits vorgemischt) anschließend dosiert und miteinander zum Versatz gemischt.

Der Versatz wird dosiert einer Formgebung, beispielsweise einer Formschale oder einer Presse, zugeführt.

Nunmehr wird der zum Grünling geformte Versatz getrocknet. Dabei härtet der Versatz, unter weitgehender oder nahezu vollständige Abgabe des Wassers, zu einem Dämmelement aus.

Das erhaltene Dämmelement kann gereinigt und nachbehandelt werden. Es kann auch, wie oben ausgeführt, mit einer Deckschicht versehen und/oder zu einem Mehrlagenelement konfektioniert werden.

Durch die Wasserabgabe während der Trocknung weist das aus dem anmeldungsgemäßen Versatz hergestellte Dämmelement einen wesentlich geringeren Wasseranteil auf als der Versatz. Der Wasseranteil im Dämmelement kann beispielsweise unter 1 Gew.-% (bezogen auf das Gesamtgewicht des Dämmelementes - ohne Kaschierung etc.) liegen; die Gewichtsanteile von geblähter Perlite, Kieselsol, Stärke und Hydrophobierungsmittel zueinander im Dämmelement ändern sich gegenüber deren Gewichtsanteile zueinander im Versatz ansonsten nicht.

Erfindungsgemäß ist zur Lösung der Aufgabe zum anderen ein Dämmelement vorgesehen, das beispielsweise nach dem anmeldungsgemäßen Verfahren hergestellt sein kann, und das in seiner allgemeinsten Ausführungsform folgende Zusammensetzung aufweist:
- 65-95 Gew.-% geblähte Perlite
- 2-20 Gew.-% Kieselsol
- 2-20 Gew.-% Stärke
- 0,1-0,5 Gew.-% Hydrophobierungsmittel
(die Angaben in Gew.-% beziehen sich auf die Anteile am Gesamtgewicht des Dämmelementes - ohne Kaschierung etc.).

Das Gefüge des Dämmelementes wird bestimmt von den in eine Bindermatrix eingebetteten Körnern aus geblähter Perlite, wobei die Bindermatrix aus Kieselsol, Stärke und Hydrophobierungsmittel zusammengesetzt ist.

Das Dämmelement zeichnet sich insbesondere dadurch aus, dass Kieselsol, Stärke und Hydrophobierungsmittel über das gesamte Volumen der Bindermatrix (im wesentlichen gleichmäßig) verteilt vorliegen. Beim Herstellungsprozess des Dämmelementes wurde das Bindemittel zäher (viskoser) gemacht, so dass das Bindemittel praktisch nicht in die Körner aus geblähter Perlite eindringen konnte. Entsprechend zeichnet sich das Gefüge des Dämmelementes insbesonder auch dadurch aus, dass kein oder nur ein sehr geringer Anteil (beispielsweise nur zwischen 0,1 und 5 Gew.-% der Bindermatrix) an Bindermatrix in den Perlitekörnern vorliegt.

Insgesamt zeichnet sich das anmeldungsgemäße Dämmelement damit durch einen, im Vergleich zu Dämmelementen auf Basis geblähter Perlite nach dem Stand der Technik, relativ hohen Anteil an geblähter Perlite aus (da kein oder oder nur ein sehr geringer Anteil an Bindermatrix im Perlitekorn vorliegt). Der Anteil an geblähter Perlite im Dämmelement kann bei 65-95 Gew.-% liegen, also beispielsweise auch bei 80-95 Gew.-% oder bei 85-90 Gew.-%. Die geblähte Perlite kann in der oben angegebenen Körnung vorliegen. Statt geblähter Perlite kann auch ein anderes geblähtes, mineralisches Schüttgut verwendet werden, beispielsweise geblähte Vermiculite, Schaumglas oder Blähglas.

Indem das Hydrophobierungsmittel über das Volumen der Bindermatrix verteilt vorliegt, ist das Dämmelement über das gesamte Volumen hydrophobiert (massehydrophobiert), mit den oben beschriebenen Vorteilen. Das Hydrophobierungsmittel kann in Anteilen von 0,1-0,5 Gew.-% vorliegen, also beispielsweise auch in Anteilen von 0,2-0,4 Gew.-%.

Kieselsol kann im Dämmelement in Anteilen von 2-20 Gew.-% vorliegen, also beispielsweise auch in Anteilen von 2-10 Gew.-% oder von 4-9 Gew.-%.

Die Stärke kann in Anteilen von 2-20 Gew.-% vorliegen, also beispielsweise auch in Anteilen von 2-10 Gew.-% oder von 3-8 Gew.-%.

Für Kieselsol, Stärke und Hydrophobierungsmittel des Dämmelementes können die jeweiligen Stoffauswahlen getroffen werden, die oben zum Versatz beschrieben wurden.

Das Dämmelement kann einen Anteil an Verunreinigungen unter 1 Gew.-% aufweisen.

Das aus dem anmeldungsgemäßen Versatz erstellte Dämmelement sowie das anmeldungsgemäße Dämmelement (nachfolgend jeweils Dämmelement genannt) kann jeweils ein beliebiges Dämmelement sein, insbesondere jedoch beispielsweise ein wärmeisolierendes Dämmelement.

Das Dämmelement kann beispielsweise in Form einer Dämmplatte, beispielsweise einer Wanddämmplatte, in Form eines Dämmsteins oder in Form sonstiger Formteile, wie zum Beispiel Halbschalen als Rohrverkleidungen, konfektioniert sein. Es kann auch vorgesehen sein, den anmeldungsgemäßen Versatz zur Verfüllung von Hohlräumen zu verwenden.

Das Dämmelement kann beispielsweise zur Fassadendämmung, Dachdämmung, insbesondere auch Flachdachdämmung oder zur Kellerdeckendämmung verwendet werden.

Die Dichte des Dämmelementes kann äußerst gering sein und beispielsweise im Bereich von 80-200 kg/m³ liegen, also beispielsweise auch im Bereich von 80-120 kg/m³.

Die Wärmeleitfähigkeit des Dämmelementes kann ebenfalls sehr gering sein und beispielsweise zwischen 0,4-0,5 W/m·K liegen, also beispielsweise etwa 0,45 W/m·K betragen.

Das Dämmelement kann ein- oder beidseitig kaschiert sein, zum Beispiel mit Blech, Zement oder einer sonstigen Kaschierung.

Es kann auch vorgesehen sein, das Dämmelement als Mehrlagenelement zu konfektionierern, wobei beispielsweise mehrere anmeldungsgemäße Dämmelemente, beispielsweise auch über zwischengeschaltete Lagen einer anderen Materialart, in mehreren Lagen übereinander angeordnet sein können.

Das Dämmelement kann auf seiner Oberfläche zumindest abschnittsweise mit einer hydrophobierenden, stabilisierenden oder einer Abrieb verbessernden Deckschicht versehen sein. Durch diese Deckschicht können die Oberflächeneigenschaften des Dämmelementes gezielt beeinflusst werden.

Beispielsweise kann die Deckschicht auf Basis eines oder mehrerer der folgenden Produkte gebildet sein: Latex, Dispersion (zum Beispiel auf Basis Acrylat oder Polyvinylacetat), Wachs, Bitumen oder Silikonharzemulsion.

Das Dämmelement zeichnet sich insbesondere auch dadurch aus, dass es durch Druck irreversibel verformbar ist. Entsprechend kann das Dämmelement durch Druck in eine beliebige Form gepresst werden.

## Patentansprüche

1. Versatz zur Erstellung eines Dämmelementes mit
a) 45-60 Gew.-% geblähter Perlite,
b) 30-50 Gew.-% Wasser,
c) 1-10 Gew.-% Kieselsol,
d) 2-10 Gew.-% Stärke und
e) 0,1-0,5 Gew.-% Hydrophobierungsmittel.

2. Versatz nach Anspruch 1 mit 50-58 Gew.-% geblähter Perlite.

3. Versatz nach Anspruch 1 mit 42-48 Gew.-% Wasser.

4. Versatz nach Anspruch 1 mit 2-4,5 Gew.-% Kieselsol

5. Versatz nach Anspruch 1 mit 6-8 Gew.-% Stärke

6. Versatz nach Anspruch 1, bei dem die geblähte Perlite eine Korngröße im Bereich von größer 0 bis 3mm aufweist.

7. Versatz nach Anspruch 1 mit einem Anteil an Verunreinigungen unter 1 Gew.-%

8. Versatz nach Anspruch 7 mit einem Anteil an Verunreinigungen in Form von Eisenerz unter 0,1 Gew.-% und in Form sonstiger Verunreinigungen unter 0,9 Gew.-%

9. Dämmelement, erstellt mit einem Versatz nach Anspruch 1.

10. Dämmelement mit folgender Zusammensetzung:
a) 65-95 Gew.-% geblähte Perlite,
b) 2-20 Gew.-% Kieselsol,
c) 2-20 Gew.-% Stärke und
d) 0,1-0,5 Gew.-% Hydrophobierungsmittel.

11. Dämmelement nach Anspruch 10 mit 80-95 Gew.-% geblähter Perlite.

12. Dämmelement nach Anspruch 10 mit 2-10 Gew.-% Kieselsol.

13. Dämmelement nach Anspruch 10 mit 2-10 Gew.-% Stärke.

14. Dämmelement nach Anspsruch 10 mit 0,1-0,5 Gew.-% Hydrophobierungsmittel.
